# FASCICULE DE BREVET EUROPEEN

(11) **EP 1 941 593 B1**
(45) Date de publication et mention de la délivrance du brevet: **16.04.2014**
(21) Numéro de dépôt: 06807604.1
(22) Date de dépôt: 27.10.2006
(51) Int. Cl.: H02J 1/14, H02J 1/10, H02P 23/06, H02P 25/02

(54) **DISPOSITIF MIXTE DE CONTROLE DU TRANSFERT DE PUISSANCE ENTRE DEUX COEURS D'UN RESEAU CONTINU ET D'ALIMENTATION D'UN MOTEUR A COURANT ALTERNATIF**
GEMISCHTE EINRICHTUNG ZUR STEUERUNG DES LEISTUNGSTRANSFERS ZWISCHEN ZWEI KERNEN EINES GLEICHSTROMNETZWERKS UND ZUM VERSORGEN EINES WECHSELSTROMMOTORS
MIXED DEVICE FOR CONTROLLING POWER TRANSFER BETWEEN TWO CORES OF A DIRECT CURRENT NETWORK AND SUPPLYING AN ALTERNATING CURRENT MOTOR

(30) Priorité: 27.10.2005 FR 0553270
(43) Date de publication de la demande: 09.07.2008
(73) Titulaire: AIRBUS OPERATIONS, 31060 Toulouse (FR); Centre National de la Recherche Scientifique, 75016 Paris (FR); Institut National Polytechnique de Toulouse (I.N.P.T), 31029 Toulouse cedex 4 (FR)
(72) Inventeur: RAULIN, Loïc, F-31830 Plaisance-du-Touch (FR); PIQUET, Hubert, F-81500 Garrigues (FR); ROBOAM, Xavier, F-31770 Colomiers (FR); FOCH, Henri, F-31200 Toulouse (FR); REGNIER, Jérémi, F-31000 Toulouse (FR)
(74) Mandataire: Ilgart, Jean-Christophe
(86) Numéro de dépôt international: PCT/EP2006/067854
(87) Numéro de publication internationale: WO 2007/048838

(56) Documents cités:
- EP-A- 1 494 343
- EP-A- 1 511 149
- DE-A1- 4 439 932
- DE-A1- 19 624 555
- US-A1- 2005 002 210
- US-A1- 2005 231 152

## Description

### DOMAINE TECHNIQUE

La présente invention concerne un dispositif mixte de contrôle du transfert de puissance entre deux coeurs d'un réseau continu et d'alimentation d'un moteur à courant alternatif.

Le domaine technique de l'invention est notamment celui des réseaux continus embarqués à bord d'aéronef. Mais le dispositif de l'invention peut également être utilisé avec tout type de réseaux embarqués (naval, automobile,...) voire des réseaux non embarqués par exemple dans le cadre d'applications stationnaires correspondant à un réseau fixe (réseau local continu, ferroviaire, ...)

Pour des raisons de simplification de description, on se limitera dans la suite de la description au domaine embarqué aéronautique.

Dans la suite de la description les expressions « réseaux continus » et « réseaux à courant continu » ont la même signification et peuvent donc être indifféremment employées.

### ÉTAT DE LA TECHNIQUE ANTÉRIEURE

L'intérêt du transfert d'énergie par des liaisons continues dans les réseaux embarqués est principalement dû au développement de l'électronique de puissance, notamment du fait de l'augmentation du nombre des actionneurs électromécaniques embarqués, à bord des avions. La plupart de ces actionneurs, commandés et alimentés grâce à des convertisseurs statiques, nécessite, en effet, la présence d'un étage de tension continue. Or un tel étage est obtenu à partir d'un réseau alternatif classique en utilisant une conversion alternatif-continu.

On peut remplacer toutes les unités de conversion ainsi utilisées par une distribution continue centralisée de l'énergie : cette distribution peut être une distribution directe totale (réseau haute tension continue ou HVDC) ou partielle (réseau mixte alternatif-continu).

Cependant, la mise en oeuvre de tels réseaux continus pose des problèmes techniques compte tenu notamment de la nécessité d'assurer la stabilité de ces réseaux quelque soit le type de charge alimentée.

Pour obtenir une qualité de tension suffisante pour chaque équipement connecté à un tel réseau continu et filtrer les harmoniques générés par cet équipement, on peut utiliser un filtre, par exemple de type LC (L : inductance ; C : capacité) placé à l'entrée de l'équipement. Dans les réseaux continus actuels les charges connectées sont souvent contrôlées par des électroniques de puissance et de commande qui absorbent, à l'échelle de la fréquence de coupure du filtre, une puissance quasi constante. Un tel phénomène est d'autant plus marqué que la régulation de l'équipement connecté est dynamiquement performante. Mais le filtre d'entrée, placé entre l'alimentation continue et le convertisseur statique régulé, est alors susceptible d'entrer en oscillation lors d'un impact de puissances. Plus le rapport L/C est élevé, ce qui est en particulier le cas lorsqu'on connecte l'équipement sur une grande longueur de câble, plus les oscillations de la tension aux bornes de la capacité du filtre sont importantes.

Le document référencé « Méthode d'étude de la stabilité des ensembles convertisseurs-filtres » de Philippe Barrade, Hubert Piquet, et Yvon Cherom (Journal de Physique III, vol 6, pages 91 à 104 janvier 1996) met ainsi en évidence le fait que tout système constitué d'un filtre chargé par un convertisseur statique, qui absorbe une puissance constante à l'échelle de la dynamique du filtre, est un système potentiellement instable.

Les architectures de réseaux alternatifs actuels consistent à connecter tous les équipements sur un « coeur » centralisé unique au travers de lignes, qui peuvent atteindre de grandes longueurs, et devenir alors fortement impédantes.

Un « coeur » est un noeud d'interconnexion sources - charges incluant des organes de protection et de contact, dont la tensions (ici continue) est stabilisée par un élément extérieur. Un coeur peut être relié à une source d'énergie: groupe alternateur + redresseur (« coeur relié »). Il peut aussi n'être relié qu'à une source de puissance (organe de stockage) ou tout simplement à un ou plusieurs autres coeurs (« coeur non relié »).

Compte tenu des phénomènes d'instabilité potentiels évoqués plus haut, et de la propension de l'utilisation de grandes longueurs de câble à accentuer ce phénomène, il n'est donc ni suffisant ni judicieux de calquer l'architecture des réseaux continus sur celle des réseaux alternatifs.

Les documents « Subsystem interaction analysis in power distribution system of next generation airlifters » de Sriram Chandrasekaran, Douglas K. Lindner, Konstantin Louganshi, et Dushan Boroyevich (European power electronics conference, Lausanne, Suisse, 7-9 septembre 1999, pages 1-6) et « An active bus conditioner for a distributed power system» de Kun Xing, Jinghong Guo, Wenkang Huang, Dengming Peng, Fred C. Lee et Dusan Borojevic (Power Electronics Specialists Conference, pages 895-900, 1999 PESC 99. 30th Annual IEEE) décrivent deux solutions de l'art connu ayant pour but de diminuer les risques d'instabilité.

Le premier de ces deux documents décrit un système de distribution de puissance embarqué à bord d'un avion, dans le cadre de l'initiative MEA (« More Electric Aircraft » ou avion plus électrique). La plupart des charges, comprenant des actionneurs, sont régulées en utilisant des convertisseurs de puissance bidirectionnels, qui contrôlent et conditionnent la puissance à partir d'un bus continu. La perte de stabilité en cas de perturbations importantes est analysée dans ce document pour montrer l'utilité d'une méthode d'analyse de stabilité non linéaire.

Le second de ces deux documents décrit un conditionneur de bus continu actif pour un système de puissance distribué, qui compense le courant harmonique sur un bus continu et atténue activement les oscillations dans le système de puissance continu.

La demande de brevet EP 1511149 décrit un système de transfert de puissance entre une pluralité de sources de puissance. Ce système comprend cette pluralité de sources de puissance et un convertisseur de puissance comprenant une paire de commutateurs pour chacune de ces sources de puissance, chaque commutateur étant connecté à une paire respective de bornes de chaque source. Chaque commutateur est associé à une diode. Le convertisseur comprend une pluralité d'inducteurs dont le nombre est inférieur de un au nombre de sources, et une unité de commande configurée pour activer les commutateurs.

La demande de brevet DE 19624555 décrit un circuit de transfert de puissance entre un circuit alternatif monophase ou multphase et un circuit continu. Le circuit de transfert comprend des convertisseurs de courant dans des circuits intermédiaires qui contrôlent le flux d'énergie entre des sources de tension à courant alternatif chargées et des circuits à courant alternatif à basse fréquence ou à courant continu, dont des commutateurs électroniques bidirectionnels ont des points de connexion à anode et/ou cathode commune avec le circuit, qui possède deux connections ou plus à la source à courant alternatif. Les sources à courant alternatif chargées sont terminées par deux condensateurs ou plus en série, dont les jonctions sont connectées aux points de connexion communs des convertisseurs via des commutateurs comprenant un circuit série formé d'un commutateur électronique et de soit une inductance soit une capacitance soit une inductance en série avec une capacitance.

La demande de brevet DE 4439932 décrit un dispositif onduleur contenant des sources isolées à courant continu qui sont prévues séparément pour un premier onduleur et un deuxième onduleur, deux sources de courant continu, qui ont des connexions positive et négative qui sont connectés en parallèle par l'intermédiaire d'une bobine d'inductance telle qu'une bobine d'induction à phase nulle, par exemple, qui présente une impédance élevée, afin de réduire le courant en phase, ou une source de courant continu commune. La bobine d'inductance pour la réduction du courant en phase est disposée entre les connexions d'entrée de courant continu positive et négative des deux onduleurs afin de maintenir le courant en phase à distance de celles-ci, de telle sorte qu'ils traversent le côté continu entre les onduleurs. Dans le dispositif onduleur, un moteur qui comporte un enroulement d'induit avec un circuit en delta ouvert est connecté en série entre les bornes de sortie de courant alternatif du premier onduleur et du deuxième onduleur.

La demande de brevet US 2005/0231152 décrit un onduleur pour un véhicule hybride/électrique. Un tel véhicule comprend un système de batterie connecté à un chargeur courant continu, un onduleur couplé au système de batterie et un moteur électrique courant continu. Ce moteur comprend des premier, second et troisième enroulements stator correspondant à des première, seconde, troisième phases du moteur. Chaque enroulement stator comprend des premier et second conducteurs, et l'onduleur comprend une pluralité de commutateurs qui sont connectés pour fournir un courant aux enroulements stator, aux premier et second conducteurs.

L'invention a pour objet de mixer deux fonctions distinctes :
a) diminuer les risques d'instabilité en interfaçant entre deux coeurs, placés dans des zones différentes du système et donc séparés par des distances importantes, une électronique de puissance et de contrôle capable de gérer les transferts de puissance entre ces coeurs, en assurant la qualité et la disponibilité de cette puissance en mode normal comme en mode dégradé (perte d'une source, surcharge de puissance sur un coeur,...) , et
b) alimenter un moteur à courant alternatif.

### EXPOSÉ DE L'INVENTION

L'invention concerne un dispositif permettant de mixer deux fonctions :
a) contrôle du transfert de puissance entre deux coeurs (noeuds) d'un réseau continu ; et
b) alimentation contrôlée d'un moteur à courant alternatif avec les characteristiques techniques de la revendication 1.

Avantageusement chaque cellule de commutation est constituée de deux interrupteurs unidirectionnels en tension et bidirectionnels en courant. Chaque interrupteur peut comprendre un transistor associé à une diode dans une structure anti-parallèle.

Le dispositif de l'invention présente les avantages suivants :
- Il permet de concevoir des architectures de réseaux maillés à coeurs décentralisés, et de garantir la stabilité de ces réseaux en minimisant les longueurs de câbles entre les noeuds de tension stabilisés (coeurs) et les équipements, même lorsqu'il s'agit de charges déstabilisantes absorbant une puissance quasi constante.
- Il réalise, en mode normal, un transfert réglable de puissance entre deux coeur, permettant de répartir et équilibrer les flux de puissance du ou des réseaux. La stabilité est garantie grâce à une liaison contrôlée en courant, même si les longueurs de câbles entre coeurs sont importantes et que des mailles susceptibles d'osciller sont présentes. Les modes de connexion/déconnexion de coeurs sont donc stables et sans « à-coups ».
- Il peut jouer, en mode normal, le rôle de « stabilisateur de tension » d'un coeur non relié à une source d'énergie.
- Il peut jouer, en mode dégradé (par exemple lors de la perte d'une source), le rôle de « stabilisateur de tension » du coeur relié à une source en défaut après déconnexion du noeud vis-à-vis de cette source.
- Il ne nécessite pas d'inductances supplémentaires dans la mesure où les enroulements inductifs du moteur à courant alternatif sont utilisés. La fonction alimentation est peu ou pas altérée par de grandes longueurs de câble.
- Les tensions appliquées en différentiel aux six bornes des trois enroulements du moteur à courant alternatif sont doublées par rapport aux tensions disponibles à partir d'un coeurs, ce qui permet d'envisager pour une même puissance une diminution du courant et, à priori, un dimensionnement plus avantageux du moteur à courant alternatif.
- Le surcoût en silicium engendré est nul par rapport à une fonction actionneur classique de puissance équivalente.

### BRÈVE DESCRIPTION DES DESSINS

La figure 1 illustre le dispositif mixte de contrôle de transfert de puissance entre deux coeurs d'un réseau continu, et d'alimentation d'un moteur à courant alternatif selon l'invention.
La figure 2 illustre une architecture de réseau embarqué à coeur décentralisé selon l'invention.
La figure 3 illustre un exemple de réalisation du dispositif de l'invention.

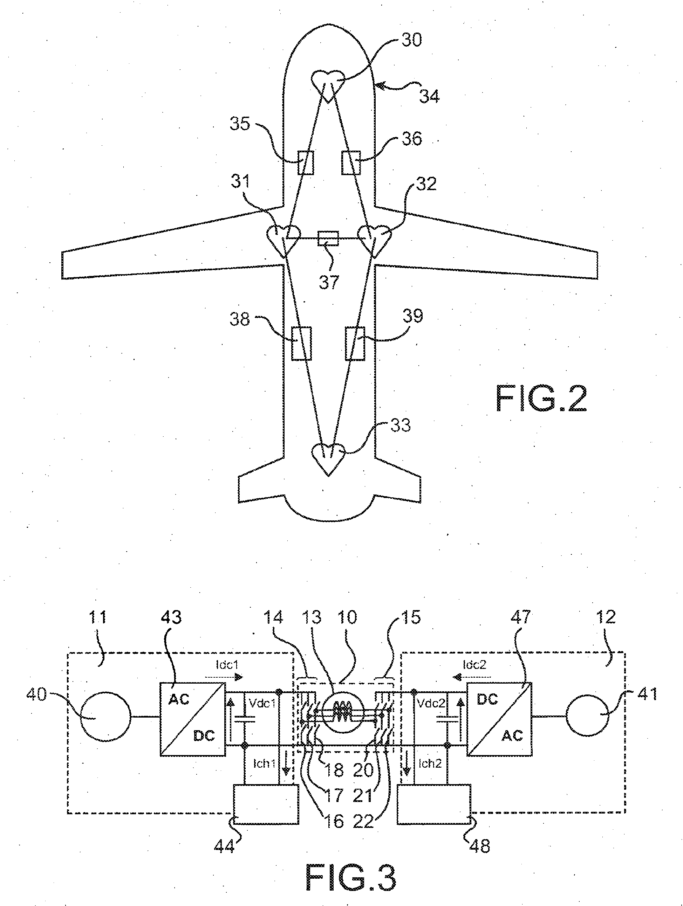

Les figurés 4A à 4D illustrent des chronogrammes obtenus avec l'exemple de réalisation de la figure 3, ces figures illustrant respectivement les courants dans le moteur IM, les tensions des bus VB, les courants des bus IB1, et les courants de charge IC1 en fonction du temps.

### EXPOSÉ DÉTAILLÉ DE MODES DE RÉALISATION PARTICULIERS

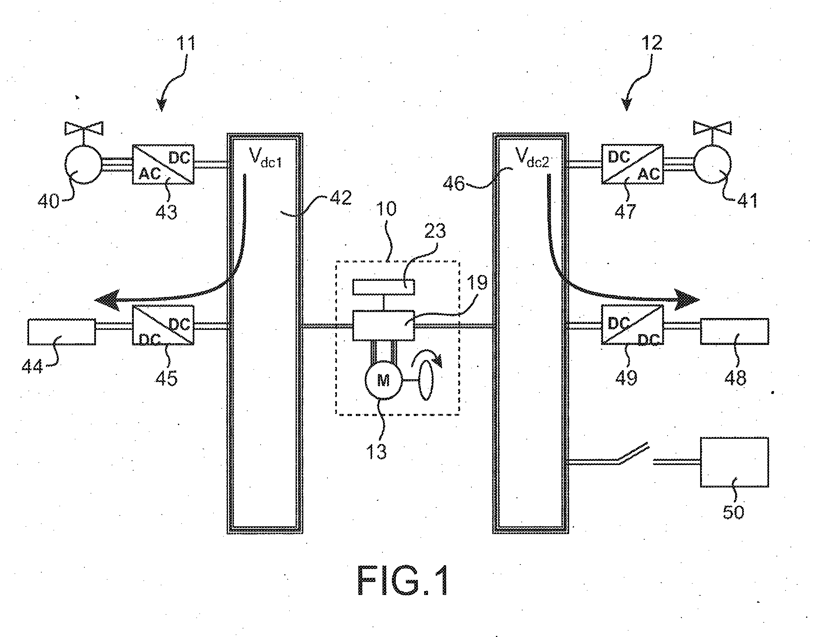

La figure 1 illustre une représentation schématique du dispositif mixte 10 de contrôle du transfert de puissance entre deux cours 42 et 46 d'un réseau continu et d'alimentation d'un moteur à courant alternatif 13 de l'invention, qui comprend :
- un ensemble 19 de deux onduleurs triphasés 14 et 1.5 constitués chacun de trois cellules de commutation 16, 17, 18 et 20, 21, 22 reliées à ce moteur 13, comme illustré sur la figure 3, chaque cellule de commutation étant constituée de deux interrupteurs unidirectionnels en tension et bidirectionnels en courant, par exemple un transistor associée à une diode dans une structure anti-parallèle, ce moteur à courant alternatif 13 ayant ses trois enroulements stators connectés aux deux onduleurs triphasés,
- un module 23 de commande de cet ensemble 1-9 pour assurer à la fois un transfert de puissance réglable à courant continu, une stabilisation de la tension continue des deux coeurs 42 et 46 et le pilotage de ce moteur.

La commande des cellules de commutation 16, 17, 18 et 20, 21, 22 permet le contrôle quasi instantané du courant sur la ligne connectant les deux coeurs 42 et 46, avec des temps de réponse d'un ordre de grandeur de quelques périodes de commutation des cellules associées dans le dispositif de l'invention (typiquement quelques millisecondes). Ce contrôle permet :
- de mettre en place un réglage du transfert de puissance entre les deux cours 42 et 46 en régime de fonctionnement normal, comme en cas de défaut sur l'alternateur associé à l'un d'entre eux, ce transfert de puissance pouvant intervenir indifféremment d'un des deux coeurs vers l'autre ;
- de régler et d'équilibrer les puissances fournies par les alternateurs qui alimentent les cours ;
- de contribuer à garantir, grâce à une commande adaptée des cellules de commutation du dispositif de l'invention, la stabilité de la tension des deux coeurs 42 et 46 fournie au niveau des coeurs.

Le dispositif de l'invention remplit ainsi plusieurs fonctions. Il permet à la fois :
- un transfert de puissance réglable à courant continu,
- un contrôle et une stabilisation de la tension continue d'un des deux cours 42 ou 46, et
- une alimentation et le pilotage d'un moteur à courant alternatif.

Le dispositif de l'invention est plus particulièrement orienté vers la gestion et le contrôle des échanges d'énergie entre deux coeurs décentralisés, qui ont une caractéristique fondamentale de type « source de tension » (au moins en instantané), qui peut être confirmée par un ensemble de condensateurs si nécessaire.

La figure 2 illustre ainsi une architecture, embarquée à bord d'un avion 34, à cours décentralisés 30, 31, 32 et 33, dans laquelle plusieurs dispositifs selon l'invention 35, 36, 37, 38 et 39 sont respectivement disposés entre deux codeurs voisins.

On va considérer ci-dessous chacune des fonctions du dispositif de l'invention.

### • Transfert de puissance réglable

Le dispositif de l'invention permet de répartir équitablement les puissances consommées par les utilisateurs réseau sur les alternateurs.

La figure 1 illustre ainsi la répartition de la puissance consommée entre deux alternateurs 40 et 41.

Le premier alternateur 40 est relié à une première barre de distribution (premier coeur) 42 à travers un premier module de redressement alternatif-continu stabilisé 43. Une première charge 44 est reliée à cette première barre de distribution 42 à travers un premier module continu-continu 45.

Le second alternateur 41 est relié à une seconde barre de distribution (second coeur) 46 à travers un second module de redressement alternatif-continu stabilisé 47. Une seconde charge 48 est reliée à cette seconde barre de distribution 46 à travers un second module continu-continu 49.

Le dispositif de l'invention 10, qui est disposé entre les deux barres de distribution (coeurs) 42 et 46, permet d'équilibrer les puissances fournies par les deux alternateurs 40 et 41. Lorsqu'une variation de charge a lieu sur l'un des coeurs 42 ou 46, l'alternateur le moins chargé vient fournir, via le dispositif de l'invention 10, une partie de la puissance nécessaire à l'alimentation des charges 44, 48 et 50.

En fonctionnement normal, la puissance à répartir sur les alternateurs 40 et 41 peut ainsi être calculée en fonction de la somme globale des éléments consommateurs, et non plus de la somme des éléments consommateurs reliés à un seul alternateur isolé. Le point de fonctionnement de ces alternateurs 40 et 41 peut ainsi être imposé et maîtrisé. Le dispositif de l'invention 10 agit comme un « robinet » électronique capable de régler les transferts de puissance, même en présence de variations de tension de la source continue qui l'alimente.

### • Contrôle et stabilisation de la tension

Le dispositif de l'invention 10 permet d'alimenter un coeur non relié à partir d'un coeur relié, ou de gérer la reconfiguration du réseau en cas de panne d'une ou plusieurs sources.

Le dispositif de l'invention 10, en cas de panne d'un des alternateurs 40 et 41, permet de réaliser un transfert de puissance vers la partie du réseau située du côté de l'alternateur en panne et de maîtriser les phénomènes transitoires et oscillatoires qui pourraient se produire.

### • Commande du moteur à courant alternatif

Comme illustré sur la figure 3, le moteur électrique 13 est connecté en différentiel entre les deux onduleurs 14 et 15 connectés aux deux ensembles de redressement 11 et 12.

Cette solution permet de disposer d'une tension d'alimentation de ce moteur 13 doublée par rapport au cas où l'alimentation serait réalisée a l'aide d'un seul onduleur de tension. Ce mode de fonctionnement est classique et la commande des deux onduleurs 14 et 15 pour obtenir les performances requises du moteur 13 fait partie des connaissances de l'homme du métier.

Si les deux coeurs 42 et 46 sont séparés par une distance importante, chaque onduleur 14 ou 15 doit être placé à proximité du coeur auquel il est connecté. Les inductances de ligne (qui ne sont pas représentées sur la figure) se trouvent alors en série avec les enroulements du moteur 13.

On utilise donc les enroulements du moteur 13 comme moyen de faire circuler une composante homopolaire de courant dans les trois phases des onduleurs, vecteur d'une transmission de puissance entre les coeur.

Le contrôle de cette composante homopolaire, qui est effectué grâce a la commande des onduleurs, permet :
- de mettre en place un réglage du transfert de puissance entre les deux coeurs 42 et 46, en régime de fonctionnement normal, comme en cas de défaut sur l'alternateur associé à l'un d'entre eux ; il n'y pas de sens privilégié pour ce transfert de puissance, qui peut intervenir indifféremment d'un coeur vers l'autre;
- de régler et notamment d'équilibrer les puissances fournies par les alternateurs 40 et 41 qui alimentent les coeur
- De contribuer a garantir, grâce a une commande adaptée des deux onduleurs 14 et 15, la stabilité de la tension fournie au niveau des coeurs 42 et 46.

Si aucun échange d'énergie n'a lieu entre les deux coeurs, le moteur 13 est alimenté normalement et on obtient une fonction classique d'actionneur. Si un échange d'énergie est requis, une puissance réglable peut être transmise d'un coeur à l'autre. Une composante homopolaire de courant vient alors se superposer aux courants alternatifs du moteur 13. En terme de commande les fonctions sont très facilement et très simplement découplées en raisonnant dans un repère de Park. En effet, le contrôle (couple, vitesse,...) de l'actionneur s'effectue classiquement en contrôlant les courants d'axe (d,q), tandis que les fonctions transfert de puissance et stabilisation de tension se «superposent» par un simple contrôle du courant homopolaire (axe o) . On utilise donc ici tous les degrés de liberté du système triphasé.

Ainsi, grâce à la structure du dispositif de l'invention, tant que le courant total (continu + alternatif) reste inférieur au courant maximal admissible par les interrupteurs, et par le moteur 13, ce dernier reste alimenté dans des conditions normales (non limitées) de fonctionnement et l'échange de puissance entre les deux réseaux est transparent pour le moteur. Si le courant maximal admissible est atteint et que la priorité est donnée aux fonctions transfert de puissance et stabilisation de tension (la composante continue est prioritaire), il faut réduire la composante alternative du courant dans le moteur : la fonction actionneur est alors dégradée.

### Exemple de réalisation

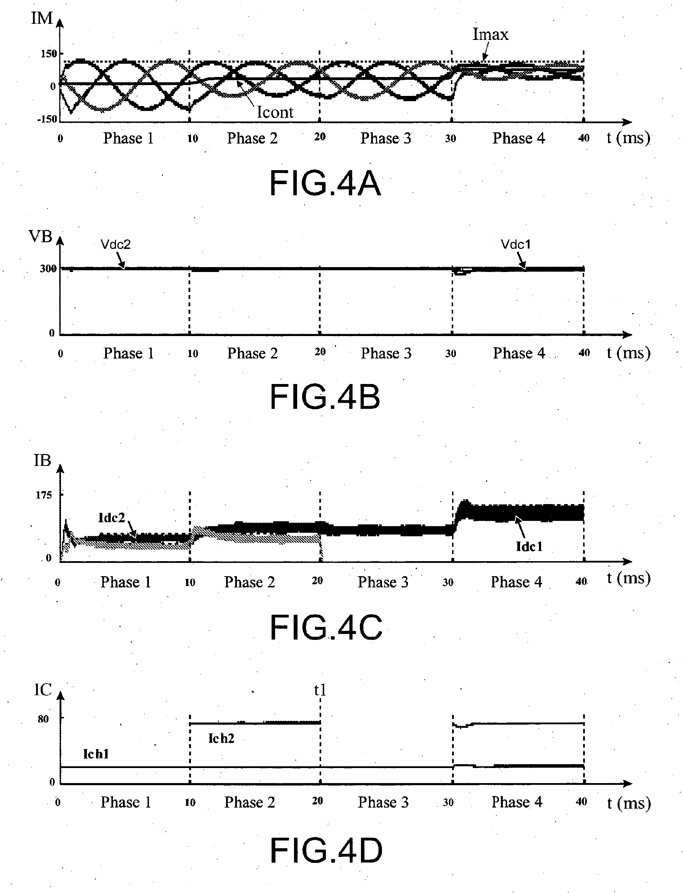

Le moteur 13 du dispositif de l'invention est caractérisé par un fonctionnement maximal sous un courant de phase Imax d'une amplitude de 150A, comme illustré sur la figure 4A. La stratégie de commande des onduleurs 14 et 15 intègre comme contrainte de ne jamais dépasser cette valeur, afin de garantir la sécurité du moteur 13 et des onduleurs 14 et 15. Cette stratégie ne représente pas de caractère obligatoire dans la structure du dispositif de l'invention et est présentée ici à titre d'exemple. L'injection d'une composante homopolaire, qui se traduit par une composante continue Icont dans les trois phases du moteur se fait donc ici au détriment de l'amplitude de la composante sinusoïdale des courants de phase, comme illustré sur la figure 4A (le corollaire de ce choix est donc une réduction de la puissance mécanique fournie par le moteur).

La définition de la composante homopolaire du courant qui transite au travers du dispositif de l' invention est ici guidée par l'objectif d'équilibrer les puissances fournies par les deux alternateurs 40 et 41. On peut apprécier la satisfaction de cet objectif sur la deuxième (phases 3 et 4) partie de la figure 4C, correspondant à un fonctionnement normal, présentant des courants Idc1 et Idc2 qui sont les images des puissances fournies par les deux alternateurs 40 et 41.

La charge 44 du coeur 42 est caractérisée par un courant absorbé constant Ich1 comme illustré sur la figure 4D. La charge 48 du coeur 46 est caractérisée par un courant absorbé intermittant Ich2 comme illustré sur la figure 4D.

Les alternateurs 40 et 41 sont initialement tous deux fonctionnels. A l'instant t1 = 20ms on suppose que l'alternateur 41 connaît une défaillance et qu'il n'est plus disponible pour fournir la puissance demandée sur le choeur 46. Sur la figure 4C, on observe l'annulation du courant fourni Idc2.

L'intégralité de la puissance est alors fournie par l'alternateur 40. Le maintien de la tension du coeur 46 Vdc2 est assuré par le passage de l'onduleur 15 en mode de fonctionnement redresseur. La figure 4B présente l'évolution de la tension disponible sur les deux coeurs 42 (Vdc1) et 46 (Vdc2).

## Revendications

1. Dispositif mixte de contrôle du transfert de puissance entre deux coeurs (42,46) d'un réseau continu et d'alimentation d'un moteur courant alternatif (13) le dispositif comprenant:
- un ensemble (19) de deux onduleurs triphasés (14, 15) constitués chacun de trois cellules de commutation (16, 17, 18, 20, 21, 22) reliées à ce moteur (13), le moteur (13) ayant ses trois enroulements stator connectés aux deux onduleurs triphasés,
- un module (23) de commande de cet ensemble (19) pour piloter le moteur (13) **caractérisé en ce que** le module (23) de commande assure à la fois un transfert de puissance réglable à courant continu entre les deux coeurs (42, 46) et la stabilisation de la tension continue par un contrôle du courant homopolaire qui fait circuler une composante homopolaire de courant dans les trois phases des onduleurs (14, 15) qui se superpose aux courants alternatifs du moteur (13).

2. Dispositif selon la revendication 1, dans lequel chaque cellule de commutation (16,17,18,20,21,22) est constituée de deux interrupteurs unidirectionnels en tension et bidirectionnels en courant.

3. Dispositif selon la revendication 2, dans lequel chaque interrupteur comprend un transistor associé à une diode dans une structure anti-parallèle.

4. Aéronef comportant un dispositif selon l'une quelconque des revendications précédentes.

## Patentansprüche

1. Gemischte Einrichtung zur Steuerung des Leistungstransfers zwischen zwei Kernen (42, 46) eines Gleichstromnetzwerks und Versorgung eines Wechselstrommotors (13), wobei die Einrichtung umfasst:
- eine Gruppe (19) von zwei Dreiphasen-Wechselrichtern (14, 15), die jeweils aus drei Kommutierungszellen (16, 17, 18, 20, 21, 22), die mit diesem Motor (13) verbunden sind, bestehen, wobei die drei Statorwicklungen des Motors (13) mit den zwei Dreiphasen-Wechselrichtern verbunden sind,
- ein Steuermodul (23) dieser Gruppe (19) zum Steuern des Motors,
**dadurch gekennzeichnet, dass** das Steuermodul (23) gleichzeitig einen regelbaren Gleichstrom-Leistungstransfer zwischen den beiden Kernen (42, 46) und die Stabilisierung der Gleichspannung durch eine Steuerung des homopolaren Stroms gewährleistet, die eine homopolare Stromkomponente in den drei Phasen der Wechselrichter (14, 15) zirkulieren lässt, die sich den Wechselströmen des Motors (13) überlagert.

2. Einrichtung nach Anspruch 1, wobei jede Kommutierungszelle (16, 17, 18, 20, 21, 22) aus zwei Unterbrechern besteht, die in Bezug auf die Spannung unidirektional und in Bezug auf den Strom bidirektional sind.

3. Einrichtung nach Anspruch 2, wobei jeder Unterbrecher einen Transistor, der in einer antiparallelen Struktur mit einer Diode verbunden ist, umfasst.

4. Luftfahrzeug, das eine Einrichtung nach einem der vorhergehenden Ansprüche aufweist.

## Claims

1. Combined device for controlling the power transfer between two cores (42, 46) of a direct current network and for powering an alternating current engine (13), the device including:
- an assembly (19) of two three-phase inverters (14, 15), each consisting of three switching cells (16, 17, 18, 20, 21, 22) connected to said engine (13), which engine (13) has three stator windings connected to the two three-phase inverters, and
- a module (23) for controlling this assembly (19) to control said engine (13),
**characterized in that** said module (23) for controlling ensures both an adjustable direct current power transfer between the two cores (42, 46) and stabilization of the direct current voltage by a control of the homopolar current which makes a homopolar current component circulate in the three phases of the inverters (14, 15) which is superimposed with the alternating currents of the engine (13).

2. Device according to claim 1, wherein each switching cell (16, 17, 18, 20, 21, 22) comprises two switches unidirectional in voltage and bidirectional in current.

3. Device according to claim 2, wherein each switch includes a transistor associated with a diode in an anti-parallel structure.

4. Aircraft comprising a device according to any one of the previous claims.
